# EUROPEAN PATENT APPLICATION

(11) **EP 4 535 509 A1**
(43) Date of publication of application: **09.04.2025**
(21) Application number: 23851482.2
(22) Date of filing: 30.06.2023
(51) Int. Cl.: H01M 10/613, H01M 50/242

(54) **BATTERY PACK AND VEHICLE COMPRISING SAME**

(30) Priority: 12.08.2022 CN 202222132770 U
(71) Applicant: Nio Battery Technology (Anhui) Co., Ltd., Hefei, Anhui 230601 (CN)
(72) Inventor: WANG, Xianpeng, Hefei, Anhui 230601 (CN)
(74) Representative: Patentanwaltskanzlei Matschnig & Forsthuber OG
(86) International application number: PCT/CN2023/104929
(87) International publication number: WO 2024/032255

(57) **Abstract**

The disclosure provides a battery pack and a vehicle including same. The battery pack includes: a plurality of sequentially arranged cells, a micro-channel cold plate and an elastic member, where the plurality of sequentially arranged cells include a first cell and a second cell, the first cell including two opposite first cell largest side surfaces, and the second cell including two opposite second cell largest side surfaces, where one of the first cell largest side surfaces is arranged opposite one of the second cell largest side surfaces, and the micro-channel cold plate is arranged between the first cell largest side surface and the second cell largest side surface that are arranged opposite each other; and the first cell, the second cell and the micro-channel cold plate form a cell group, and the elastic member is arranged between two adjacent cell groups. The disclosure solves the problems of a poor heat dissipation effect of the cells, a low space utilization rate of the battery pack and potential safety hazards caused by unevenness of a cooling cold plate of a pouch battery.

## Description

### Technical Field

The disclosure relates to the technical field of batteries, and particularly to a battery pack and a vehicle including same.

### Background Art

For cells having high specific energy, in conditions of thermal runaway and fast charging/discharging exceeding 2.5 C, in a solution of providing a large cold plate at bottoms or tops of the cells, heat of the cells cannot be dissipated in a timely manner due to insufficient contact surfaces between the large cold plate and the cells. This leads to problems such as the inability to suppress the spread of thermal runaway, or the excessively high temperature of the cells during fast charging., or the excessively high temperature of the cells during fast charging.

In order to solve the above problems, an ultra-thin stamped large-area cooling cold plate is usually used for cooling the cells. However, the uneven surface of the cold plate will cause indentations on the battery, resulting in lithium plating, shortening the cycle life and causing safety risks.

### Summary

The technical problem to be solved by the disclosure lies in providing a battery pack and a vehicle including same, so as to solve the problem of potential safety hazards caused by the squeezing of a cell due to an uneven surface of a cold plate or expansion of the cell.

In order to solve or alleviate the above technical problem to a certain extent, according to one aspect of the disclosure, a battery pack is provided. The battery pack includes: a plurality of sequentially arranged cells, a micro-channel cold plate and an elastic member, wherein
the plurality of sequentially arranged cells include a first cell and a second cell, the first cell including two opposite first cell largest side surfaces, and the second cell including two opposite second cell largest side surfaces, where one of the first cell largest side surfaces is arranged opposite one of the second cell largest side surfaces, and the micro-channel cold plate is arranged between the first cell largest side surface and the second cell largest side surface that are arranged opposite each other; and
the first cell, the second cell and the micro-channel cold plate form a cell group, and the elastic member is arranged between two adjacent cell groups.

In some implementations, a ratio of a thickness of the cell to a thickness of the elastic member is in a range of 3.6-100.

In some implementations, a thickness of the elastic member ranges from 0.1 millimeters to 10 millimeters.

In some implementations, the thickness of the elastic member is 1.55 millimeters.

In some implementations, the other second cell largest side surface of the second cell of one cell group of the two adjacent cell groups is arranged opposite the other first cell largest side surface of the first cell of the other cell group; and
the elastic member covers completely the other second cell largest side surface and the other first cell largest side surface that are arranged opposite each other.

In some implementations, the other second cell largest side surface of the second cell of one cell group of the two adjacent cell groups is arranged opposite the other first cell largest side surface of the first cell of the other cell group; and
the elastic member covers partially the other second cell largest side surface and the other first cell largest side surface that are arranged opposite each other.

In some implementations, one elastic member is arranged between two adjacent cell groups, and an area of the one elastic member is smaller than an area of the first cell largest side surface and an area of the second cell largest side surface.

In some implementations, the elastic member has an annular structure, or at least one hollowed-out hole is provided in the elastic member.

In some implementations, a plurality of elastic members are arranged between two adjacent cell groups, and a total area of the plurality of elastic members is smaller than an area of the first cell largest side surface and an area of the second cell largest side surface.

According to another aspect of the disclosure, a vehicle is provided. The vehicle includes a battery pack according to any one of the implementations described above.

According to the battery pack and the vehicle including same provided by the disclosure, the micro-channel cold plate is arranged between the first cell and the second cell that are adjacent to each other, such that the first cell largest side surface of the first cell and the second cell largest side surface of the second cell are in contact with the micro-channel cold plate, thereby greatly increasing a heat dissipation area of the cell, and improving the heat dissipation efficiency of the cell. The elastic member is arranged between two adjacent cell groups, so as to accommodate tolerances of the cell and/or the micro-channel cold plate during manufacturing and space of the battery pack occupied by expansion of the cell, thereby avoiding potential safety hazards caused by the squeezing of the cell.

The description above is only summary of the technical solutions of the disclosure. In order to understand the technical means of the disclosure more clearly for implementation according to the contents of the specification, and in order to make the above and other objectives, features and advantages of the disclosure more apparent and easy to be understood, preferred embodiments are especially taken as examples in conjunction with the accompanying drawings, and the detailed description is as follows.

### Brief Description of the Drawings

FIG. 1 is a schematic structure diagram of a battery pack according to an embodiment of the disclosure; and
FIG. 2 is a partial enlarged schematic diagram of area A in FIG. 1.

### [List of reference signs]

1. Cell
11. First cell
12. Second cell
2. Micro-channel cold plate
3. First connection pipe
4. Second connection pipe
5. Elastic member
6. Cell group

### Detailed Description of Embodiments

In order to further illustrate the technical means adopted by the disclosure for achieving the intended application objective and effect, the specific implementations of a battery pack and a vehicle including same according to the disclosure and their effects are described in detail below with reference to the accompanying drawings and preferred embodiments.

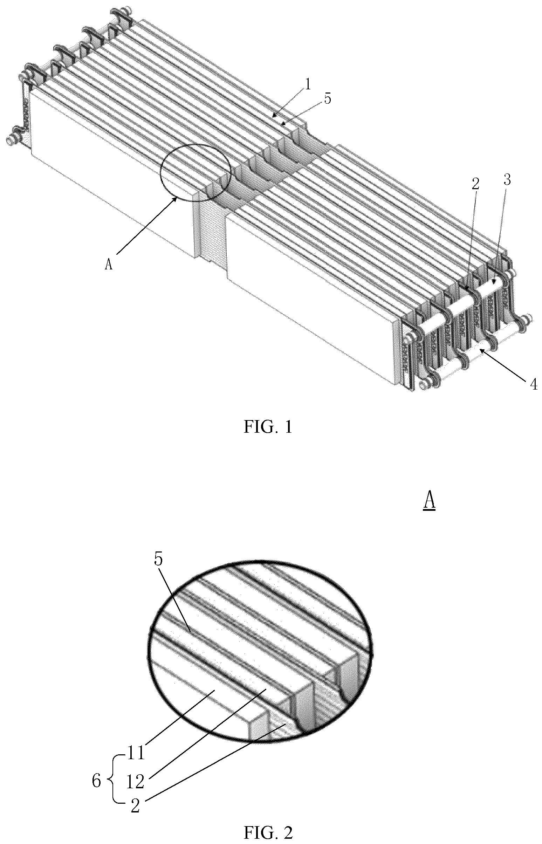

According to an embodiment of the disclosure, as shown in FIGS. 1 and 2, a battery pack is provided. The battery pack includes: a plurality of sequentially arranged cells 1 and a micro-channel cold plate 2.

As shown in FIG. 2, the plurality of sequentially arranged cells 1 include a first cell 11 and a second cell 12. In the plurality of sequentially arranged cells 1, there are at least one first cell 11 and at least one second cell 12. The first cell 11 has a first cell largest side surface, and the second cell 12 has a second cell largest side surface.

In this embodiment, the largest side surface refers to a surface having a largest area in a plurality of surfaces of the cell 1.

Generally, two opposite surfaces of the cell 1 have the same area, that is, the first cell 11 includes two first cell largest side surfaces, and the second cell 12 includes two second cell largest side surfaces. In this embodiment, after the plurality of cells 1 are arranged in sequence, one first cell largest side surface of the first cell 11 is arranged opposite one second cell largest side surface of the second cell 12. The micro-channel cold plate 2 is arranged between the first cell largest side surface and the second cell largest side surface that are arranged opposite each other. Two opposite side surfaces of the micro-channel cold plate 2 are in contact with the first cell largest side surface and the second cell largest side surface, respectively.

In this embodiment, the micro-channel cold plate 2 is arranged between the first cell 11 and the second cell 12, and the first cell largest side surface of the first cell 11 and the second cell largest side surface of the second cell 12 are in contact with the opposite side surfaces of the micro-channel cold plate 2, respectively, thereby greatly increasing a cooling area of the cell 1, and improving the cooling efficiency of the cell 1.

Further, in order to ensure a space utilization rate of the battery pack while improving the cooling efficiency of the cell 1, a thickness of the micro-channel cold plate 2 is limited.

Specifically, a ratio of a thickness of the cell 1 to the thickness of the micro-channel cold plate 2 is in a range of 3.5-50. By limiting the ratio of the thickness of the cell 1 to the thickness of the micro-channel cold plate 2, the micro-channel cold plate 2 is prevented from occupying excessive space of the battery pack, such that more cells 1 can be arranged in the battery pack, thereby improving the space utilization rate of the battery pack while ensuring the cooling effect of the micro-channel cold plate 2 on the cells 1.

In this embodiment, the thickness of the cell 1 refers to a distance between the two opposite largest side surfaces of the cell 1. The thickness of the micro-channel cold plate 2 refers to a distance between the two opposite surfaces, in contact with the first cell largest side surface and the second cell largest side surface, of the micro-channel cold plate 2.

In some implementations, the ratio of the thickness of the cell 1 to the thickness of the micro-channel cold plate 2 is in a range of 5.6-25.

In an embodiment, the thickness of the micro-channel cold plate 2 ranges from 0.5 millimeters to 5 millimeters. By limiting the thickness of the micro-channel cold plate 2, the space utilization rate of the battery pack is ensured while improving the cooling efficiency of the cell 1.

In some implementations, the thickness of the micro-channel cold plate 2 ranges from 0.8 millimeters to 2.5 millimeters.

Preferably, the thickness of the micro-channel cold plate 2 is 1.7 millimeters.

In an embodiment, a ratio of a width of a heat dissipation channel of the micro-channel cold plate 2 to a wall thickness of the micro-channel cold plate 2 is in a range of 0.5-15.

Specifically, the micro-channel cold plate 2 has a hollow structure to form the heat dissipation channel. Heat generated by the cell 1 is taken away by gas or liquid flowing through the heat dissipation channel, thereby providing an effect of cooling the cell 1. The width of the heat dissipation channel of the micro-channel cold plate 2 refers to the thickness of the micro-channel cold plate 2 minus the wall thickness of the micro-channel cold plate 2.

In this embodiment, by limiting the wall thickness of the micro-channel cold plate 2 and the width of the heat dissipation channel, a mechanical strength of the micro-channel cold plate 2 can be ensured, and the heat dissipation channel can also have a maximum width, so as to ensure a flow rate of the gas or liquid flowing through the heat dissipation channel, and achieve an optimal heat dissipation effect.

In some implementations, the ratio of the width of the heat dissipation channel of the micro-channel cold plate 2 to the wall thickness of the micro-channel cold plate 2 is in a range of 1.2-7.

Further, the wall thickness of the micro-channel cold plate 2 ranges from 0.2 millimeters to 1 millimeter. By limiting the wall thickness of the micro-channel cold plate 2, the micro-channel cold plate 2 can have a certain structural strength.

In some implementations, the wall thickness of the micro-channel cold plate 2 ranges from 0.2 millimeters to 0.45 millimeters.

Preferably, the wall thickness of the micro-channel cold plate 2 is 0.35 millimeters.

In an embodiment, the micro-channel cold plate 2 is formed as one piece by means of extrusion, such that a surface of the micro-channel cold plate 2 is flat, thereby preventing a surface of the pouch cell 1 from being squeezed, which could otherwise cause uneven indentations on the surface of the cell 1. The indentations on the surface of the cell 1 may lead to lithium plating on the cell 1, shortening a service life of the cell 1 and causing a problem of safety in use.

The micro-channel cold plate 2 may be made of an aluminum alloy (such as AL3003) and formed by extruding with an extrusion die.

In an embodiment, when the micro-channel cold plate 2 cools the cell 1 by means of liquid cooling, the battery pack further includes a first connection pipe 3 and a second connection pipe 4.

The first connection pipe 3 and the second connection pipe 4 are both arranged outside of the plurality of sequentially arranged cells 1, so as to avoid influence on the arrangement of the cells 1. The first connection pipe 3 and the second connection pipe 4 are both connected to a plurality of micro-channel cold plates 2, and are in communication with the heat dissipation channels of the micro-channel cold plates 2.

Specifically, the first connection pipe 3 is a water inlet pipe, and the second connection pipe 4 is a water outlet pipe. The provision of the first connection pipe 3 and the second connection pipe 4 realizes the flow of a cooling liquid in the heat dissipation channel of the micro-channel cold plate 2, improving the cooling effect of the micro-channel cold plate 2.

The first connection pipe 3 and the second connection pipe 4 may be arranged on the same side of the micro-channel cold plate 2 or on two opposite sides of the micro-channel cold plate 2.

According to an embodiment of the disclosure, as shown in FIG. 1, a battery pack is provided. The battery pack includes: a plurality of sequentially arranged cells 1, a micro-channel cold plate 2 and an elastic member 5.

The plurality of sequentially arranged cells 1 include a first cell 11 and a second cell 12. In the plurality of sequentially arranged cells 1, there are at least one first cell 11 and at least one second cell 12. The first cell 11 has a first cell largest side surface, and the second cell 12 has a second cell largest side surface.

In this embodiment, the largest side surface refers to a surface having a largest area in a plurality of surfaces of the cell 1.

Generally, two opposite surfaces of the cell 1 have the same area, that is, the first cell 11 includes two first cell largest side surfaces, and the second cell 12 includes two second cell largest side surfaces. In this embodiment, after the plurality of cells 1 are arranged in sequence, one first cell largest side surface of the first cell 11 is arranged opposite one second cell largest side surface of the second cell 12. The micro-channel cold plate 2 is arranged between the first cell largest side surface and the second cell largest side surface that are arranged opposite each other. Two opposite side surfaces of the micro-channel cold plate 2 are in contact with the first cell largest side surface and the second cell largest side surface, respectively.

In this embodiment, the micro-channel cold plate 2 is arranged between the first cell 11 and the second cell 12, and the first cell largest side surface of the first cell 11 and the second cell largest side surface of the second cell 12 are in contact with the opposite side surfaces of the micro-channel cold plate 2, respectively, thereby greatly increasing a cooling area of the cell 1, and improving the cooling efficiency of the cell 1.

In this embodiment, the first cell 11, the second cell 12 and the micro-channel cold plate 2 form a cell group 6, and the elastic member 5 is arranged between adjacent cell groups 6, so as to accommodate tolerances of the cell 1 and/or the micro-channel cold plate 2 during manufacturing and space of the battery pack occupied by expansion of the cell 1.

In this embodiment, the cell group 6 is merely provided for the convenience of describing a structure of the battery pack, rather than limiting the structure of the battery pack.

The elastic member 5 may be made of elastic rubber, silicone, foam, etc.

In an embodiment, in order to ensure the above effect of the elastic member 5 and also ensure the space utilization rate of the battery pack, the thickness of the elastic member 5 is limited.

Specifically, a ratio of the thickness of the cell 1 to the thickness of the elastic member 5 is in a range of 3.6-100. By limiting the ratio of the thickness of the cell 1 to the thickness of the elastic member 5, the elastic member 5 is prevented from occupying excessive space of the battery pack, such that more cells 1 can be arranged in the battery pack, thereby improving the space utilization rate of the battery pack while ensuring that the tolerances of the cell 1 and/or the micro-channel cold plate 2 during manufacturing and the space of the battery pack occupied by the expansion of the cell 1 can be accommodated by the elastic member 5.

In this embodiment, the thickness of the cell 1 refers to a distance between the two opposite largest side surfaces of the cell 1. The thickness of the elastic member 5 refers to a distance between two surfaces, in contact with the cells 1, of the elastic member 5.

In some implementations, the ratio of the thickness of the cell 1 to the thickness of the elastic member 5 is in a range of 3.6-50.

In an embodiment, the thickness of the elastic member 5 ranges from 0.1 millimeters to 10 millimeters. By limiting the thickness of the elastic member 5, the above effect of the elastic member 5 is ensured, and the space utilization rate of the battery pack can also be ensured.

In an implementation, the thickness of the elastic member 5 ranges from 0.5 millimeters to 5 millimeters.

Preferably, the thickness of the elastic member 5 is 1.55 millimeters.

In an embodiment, one or more elastic members 5 are arranged between two adjacent cell groups 6.

Specifically, the elastic member 5 arranged between two adjacent battery groups may be an integral elastic member 5 or a plurality of independent elastic members 5. For example, a plurality of elongated elastic members 5 are spaced apart evenly between two adjacent cell groups 6.

By providing the plurality of independent elastic members 5, there is a certain gap between the elastic members 5, and the heat generated by the cell 1 can be partially released through the gap, thereby providing a certain effect of cooling the cell 1.

Certainly, the plurality of elastic members being each configured to have an elongated structure is merely a specific implementation, and each elastic member may also be configured to be circular, square, etc., which is not limited in the disclosure.

In an embodiment, the other second cell largest side surface of the second cell 12 of one cell group 6 of two adjacent cell groups 6 is arranged opposite the other first cell largest side surface of the first cell 11 of the other cell group 6. The elastic member 5 covers completely the other second cell largest side surface and the other first cell largest side surface that are arranged opposite each other.

In this embodiment, a second cell largest side surface (i.e., the other second cell largest side surface), not in contact with the micro-channel cold plate 2, of the second cell 12 of one cell group 6 of two adjacent cell groups 6 is arranged opposite a first cell largest side surface (i.e., the other first cell largest side surface), not in contact with the micro-channel cold plate 2, of the first cell 11 of the other cell group 6. The elastic member 5 is then arranged between the other second cell largest side surface and the other first cell largest side surface.

In a specific embodiment, the elastic member 5 arranged between the other second cell largest side surface and the other first cell largest side surface that are arranged opposite each other covers completely the other second cell largest side surface and the other first cell largest side surface.

That is, the elastic member 5 in this embodiment has an integral structure. An area of the side surface, in contact with the cell 1, of the elastic member 5 is greater than or equal to an area of the largest side surface of the cell 1.

In another specific embodiment, the elastic member 5 arranged between the other second cell largest side surface and the other first cell largest side surface that are arranged opposite each other covers partially the other second cell largest side surface and the other first cell largest side surface.

That is, in this embodiment, an area of the side surface, in contact with the cell 1, of the elastic member 5 is smaller than the area of the largest side surface of the cell 1.

In this embodiment, the elastic member 5 may have an integral structure, for example, an annular structure, or at least one hollowed-out hole is provided in the elastic member 5. A plurality of elastic members 5 may be provided. The plurality of elastic members 5 may each have, for example, an elongated structure, a square structure or a circular structure, etc.

In this embodiment, the heat can be dissipated through a portion, not covered with the elastic member 5, between two adjacent cells 1 of two cell groups 6, thereby providing a certain effect of cooling the cell 1.

According to the embodiment of the disclosure, a vehicle is further provided. The vehicle includes a battery pack according to any one of the implementations described above.

The foregoing descriptions are merely preferred embodiments of the disclosure, and are not intended to limit the disclosure in any form. Although the disclosure has been disclosed as above by means of the preferred embodiments, these embodiments are not for the purpose of limiting the disclosure. Those skilled in the art can make alterations or modifications to the technical contents disclosed above without departing from the technical solutions of the disclosure so as to arrive at equivalent embodiments with equivalent changes. However, any simple amendments, equivalent changes and modifications made to the above embodiments according to the technical essence of the disclosure without departing from the technical solutions of the disclosure are still within the scope of the technical solutions of the disclosure.

## Claims

1. A battery pack, comprising: a plurality of sequentially arranged cells, a micro-channel cold plate and an elastic member, wherein
the plurality of sequentially arranged cells comprise a first cell and a second cell, the first cell comprising two opposite first cell largest side surfaces, and the second cell comprising two opposite second cell largest side surfaces, wherein one of the first cell largest side surfaces is arranged opposite one of the second cell largest side surfaces, and the micro-channel cold plate is arranged between the first cell largest side surface and the second cell largest side surface that are arranged opposite each other; and
the first cell, the second cell and the micro-channel cold plate form a cell group, and the elastic member is arranged between two adjacent cell groups.

2. The battery pack according to claim 1, wherein a ratio of a thickness of the cell to a thickness of the elastic member is in a range of 3.6-100.

3. The battery pack according to claim 1, wherein a thickness of the elastic member ranges from 0.1 millimeters to 10 millimeters.

4. The battery pack according to claim 3, wherein the thickness of the elastic member is 1.55 millimeters.

5. The battery pack according to claim 1, wherein the other second cell largest side surface of the second cell of one cell group of the two adjacent cell groups is arranged opposite the other first cell largest side surface of the first cell of the other cell group; and
the elastic member covers completely the other second cell largest side surface and the other first cell largest side surface that are arranged opposite each other.

6. The battery pack according to claim 1, wherein the other second cell largest side surface of the second cell of one cell group of the two adjacent cell groups is arranged opposite the other first cell largest side surface of the first cell of the other cell group; and
the elastic member covers partially the other second cell largest side surface and the other first cell largest side surface that are arranged opposite each other.

7. The battery pack according to claim 6, wherein one elastic member is arranged between two adjacent cell groups, and an area of the one elastic member is smaller than an area of the first cell largest side surface and an area of the second cell largest side surface.

8. The battery pack according to claim 7, wherein the elastic member has an annular structure, or at least one hollowed-out hole is provided in the elastic member.

9. The battery pack according to claim 6, wherein a plurality of elastic members are arranged between two adjacent cell groups, and a total area of the plurality of elastic members is smaller than an area of the first cell largest side surface and an area of the second cell largest side surface.

10. A vehicle, comprising a battery pack according to any one of claims 1-9.
